# EUROPEAN PATENT APPLICATION

(11) **EP 4 571 860 A1**
(43) Date of publication of application: **18.06.2025**
(21) Application number: 23216855.9
(22) Date of filing: 14.12.2023
(51) Int. Cl.: H01M 4/04, H01M 4/139, B22F 3/093

(54) **METHOD OF PREPARING A COATED ELECTRODE**

(71) Applicant: Customcells Holding GmbH, 25524 Itzehoe (DE)
(72) Inventor: Kuhn, Peter, Itzehoe (DE)
(74) Representative: LKGLOBAL Lorenz & Kopf Patentanwalt Attorney at Law PartG mbB

(57) **Abstract**

The invention relates to a method (100) of preparing a coated electrode (250, 400), the method (100) comprising: providing a stamp (205) with a chamber (210), wherein the chamber (210) is filled with a coating material (215); providing a substrate (220), and forming a coating layer (230, 405) on the substrate (220) by pressing the stamp (205) onto the substrate (220) while an oscillating movement is applied to the stamp (205).

## Description

### BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes as a part of lithium-ion batteries and lithium metal batteries. Battery electrodes are typically conductive materials that may serve as a positive or negative terminal in a battery.

In the context of electrode production, it has been established to coat a substrate foil with an active material. The first step of coating usually involves mixing active materials and different components resulting in a coating mass known as slurry. Besides the active materials, the slurry may comprise a conductive additive (e.g. carbon black or carbon nanotubes), other additives, a binder (e.g. PVDF), and a solvent. The binder may ensure a cohesive electrode structure and the slurry's adhesion to the substrate foil. The conductive additives' and the additives' task may be to increase the slurry's conductivity. The solvent may facilitate the even dispersion of active materials, conductive additives, binder, and other additives, ensuring a homogeneous slurry.

The mixing process of the slurry usually comprises a step of dry mixing and a subsequent step of wet mixing. Dry mixing, using low or high energy, aim to thoroughly cover active materials with carbon black. Subsequently, wet mixing with solvent forms the slurry, initially agglomerated but may be made homogeneous through thorough stirring. Diverse mixing systems, techniques, temperatures, and stringent requirements may ensure quality. The slurry may meet specific parameters for homogeneity and viscosity for a safe coating process, considering changes over time that require rapid processing.

In a further step, the substrate foil may be coated with the paste-like or almost liquid slurry using an application tool (e.g. slot die, doctor blade, anilox roller). After coating, the substrate foil may pass through a drying channel. The solvent is removed from the slurry by applying heat in the drying channel.

The process as described and its requirements are thoroughly expounded upon in the literature, cf. e.g.: F. Degen and O. Krätzig, "Future in Battery Production: An Extensive Benchmarking of Novel Production Technologies as Guidance for Decision Making in Engineering," in IEEE Transactions on Engineering Management, doi: 10.1109/TEM.2022.3144882.

The process of coating a substrate foil or substrate with a slurry is however challenging due to the use of solvent. Solvent-based processes often require extensive safety measures due to their flammability and toxicity. Moreover, the use of solvents can lead to higher manufacturing costs, as solvents usually require additional equipment for handling, storage, recycling or proper disposal, adding complexity to the production process. The use of solvents not only contributes to the challenges of the process but also involves high space requirements and plant and energy costs, making it important to explore alternative methods that are more efficient, cost-effective, and environmentally friendly.

Solvent-free manufacturing method would represent significant progress in the development of cost-effective and environmentally friendly lithium-ion and lithium metal batteries.

Accordingly, efforts have been made to realize the coating in a solvent-free, thus dry, manner. For this, dry powder mixtures of active material, conductive additives and suitable binders are converted into mechanically load-bearing layers.

For example, US2008117565A1 discloses a method for pressing the coating into a free-standing film. A three-stage process is described, in which a dry powder mixture is fibrillated by means of an air jet mill, powder is conveyed into a calender nip, in which it is pressed into the free-standing film, and the free-standing film is applied to a current collector.

Furthermore, US2021320288A1 discloses a further method for producing a dry film, wherein a dry powder mixture is processed into the dry film by a rolling device comprising a plurality of rollers.

However, these methods usually require several calendering stages (i.e. relative large calender rollers), in order to obtain a free-standing film which is sufficiently thin. These methods therefore require relatively large and expensive manufacturing lines. Moreover, the thin free-standing film may be prone to be damaged before or during its application to a substrate, such as a current collector of an electrode.

### SUMMARY OF THE DISCLOSURE

Currently, it remains desirable to overcome the aforementioned problems and in particular to provide a method of preparing a coated electrode in a solvent-free manner, which is reliable, inexpensive and can be performed by a compact system.

Therefore, the present disclosure relates to a method of preparing a coated electrode. The method comprises providing a stamp with a chamber, wherein the chamber is filled with a coating material. Furthermore, the method comprises providing a substrate. The method also comprises forming a coating layer on the substrate by pressing the stamp onto the substrate while an oscillating movement is applied to the stamp.

By providing such a method, the limitations of conventional solvent-based coating techniques (as e.g. described above) can be overcome by minimizing waste and energy consumption. In particular, the method of the present disclosure does not require the use of a solvent, and therefore allows avoiding further steps like e.g drying or calendaring the coated electrode.

Moreover, compared to conventional solvent-free coating techniques (as e.g. described above) the method of the of the present disclosure may be performed by a single stamp, as described above, which may be relatively compact and inexpensive. Furthermore, the method of the present disclosure does not require to prepare a thin free-standing film (which is prone to be damaged) but instead allows to coat the electrode material directly to a substrate during its preparation. The method is thus also more reliable.

The coated electrode may be a layer assembly comprising the coating layer. The coating layer (i.e. once coated by the method of the present disclosure) may be a thin sheet of material that may be used as the active layer in a battery electrode. The coated electrode may have any thickness and shape. The coated electrode may, for example have a round or a rectangular shape. The coated electrode may be an electrode foil. The coated electrode may further comprise a substrate (or substrate foil) serving as a current collector. The substrate may have a coating layer on one or both sides. For example, the substrate may be made from a metal such as copper or aluminum. The coated electrode may be used as positive battery electrode foil or as negative battery electrode foil. The coated electrode may also be used in any other type of power storage device, e.g. a super capacitor.

The thickness of the coating layer may be greater than or equal to 40 µm to less than or equal to 200 µm, optionally less than or equal to 120 µm, and in certain variations, optionally less than or equal to 60 µm. The coated electrode may have an electrode thickness of 1 µm to 500 µm, more preferably up to 200 µm.

The coating layer, i.e. its coating material, may serve as an active material for the battery. During the operation of the battery, the active layer may be the material that may undergo a reversible electrochemical reaction during the charge and discharge process. In other words, the coating material may be the substance that may participate in the electrochemical reactions producing the flow of electrons within the battery.

The stamp may be a tool or device used to apply pressure on the coating material. The stamp may be a rigid device with a specific pattern, shape, or design on its surface that may be pressed onto a coating material to create a specific form, pattern, or imprint on the material's surface. The stamp may comprise the chamber, wherein the chamber is an enclosed space for receiving the coating material. The chamber may receive coating material in various forms such as powder form, granulate form, solid particulate state, fine particulate condition, particle state, and/or dust-like state. The chamber may have a height of less than 1 mm, preferably less than 500 µm, and even more preferably less than 200 µm.

The chamber may be either completely filled with the coating material or partially filled. In the case of partial filling, the coating material may be loosely distributed with air between the particles of the coating material. When pressing the stamp onto the substrate, the volume of the chamber is decreased. While the volume of the chamber decreases, the air in the chamber between the particles of the coating material may escape from the chamber through an air duct.

The substrate may be a foil, sheet, base or underlying material onto which a coating material or layer of another material may be applied. In the case of the coated electrode, the substrate may refer to the core or base material of the electrode onto which a specific coating material may be applied to achieve certain properties or functions, such as enhanced conductivity, corrosion resistance, or catalytic activity. The coating layer may be an additional layer that, for example, may modify the substrate's surface properties or provide specific characteristics to the electrode for its intended application.

The oscillating movement applied to the stamp may refer to a repetitive back-and-forth or up-and-down motion that may imparted to the stamp during a manufacturing or processing operation. In one example, the oscillation movement may be a vibration, e.g. caused by a vibrator mounted to the stamp. The oscillating movement may, for example, comprise periodic changes in the direction of motion, typically in a cyclic or sinusoidal manner. The oscillating movement may be linear or rotational and/or may be used to achieve specific effects or outcomes. For example, in the context of applying pressure with the stamp to the coating material, the oscillating movement of the stamp may comprise the stamp moving up and down and/or side to side in a repetitive manner. The oscillating movement may help distribute the coating material evenly, improve adherence, or achieve other desired results during the stamping or coating process. The oscillating movement may also generate heat due to friction within the coating material. The oscillating movement may cause the coating material to melt or reach the melting point. The oscillating movement may be effectively and broadly transmitted to the coating material.

In other words, the described method may comprise compacting the coating material and stamping it onto the substrate to create a coating layer. This coating layer may be stable and integral in the coated electrode.

By simultaneous compressing the powder or granulate and applying oscillating movement, multiple effect may occur. One effect may be, for example, that the friction between the particles of the granulate results in heat melting the binder (i.e. coating process). Another effect may be that the oscillating movement of the particles may enable simplified removal of air between the particles as well as densification (i.e. calendering process).

The disclosed method may potentially be faster than conventional techniques, which may result in a reduction of energy and material demand. The method may eliminate the need of a solvent or a solvent based slurry, conventional coating lines using doctor blades or slot dies as well as compacting via calender.

In one aspect, forming the coating layer may comprise generating a chamber pressure, at least partially by pressing the stamp onto the substrate.

The chamber pressure may refer to the force exerted by the content, such as gas or fluid, inside the chamber on the walls of the chamber. The chamber pressure may be influenced by several factors, including, for example, the force applied to the stamp when pressing it onto the substrate, the temperature within the chamber, and the oscillating movement. Each factor may have a partial influence on generating the chamber pressure.

The chamber pressure may affect the properties of the coating layer and the coated electrode. By controlling the chamber pressure during the pressing process or stamping, it may be possible to tune the thickness, morphology, and composition of the coating layer on the substrate. This may have a significant impact on the performance of the coated electrode (or battery electrode), such as its capacity, cycle life, and rate capability. In particular, the chamber pressure may have an impact on the density of the coating layer. The chamber pressure may also lead to other reactions in the coating layer, such as the reduction or oxidation of other chemical species. These reactions may affect the purity and stability of the coating layer, which may in turn affect the quality of the resulting coated electrode. Therefore, a careful control of the chamber pressure may be essential for the successful creation of high-quality coated electrodes.

It may be possible that the coating material may be placed into the chamber and a pressure or force may be applied to compress it before further processing. This pre-compaction step may ensure that the material may be packed densely and uniformly, making it ready for subsequent procedures.

In one aspect, ultrasound waves may be applied to the stamp in order to generate the oscillating movement. Furthermore, heat may be applied to the stamp, e.g. by one or several ultrasound transducers (e.g. piezo elements) or a transducer array mounted to the stamp.

The oscillating movement may hence be in the form of ultrasound waves propagating in the stamp. For example, the stamp may be configured as or serve as a sonotrode tool. In particular, the stamp may be set into resonance vibrations by the introduction of high-frequency mechanical vibrations (i.e. ultrasound). The stamp may thereby establish the connection between the oscillation device (i.e. an ultrasound generator) and the coating material. Accordingly, the stamp may operate like an ultrasound welding head.

Ultrasound waves may comprise high-frequency sound waves that may create rapid, alternating pressure waves. When the ultrasound waves further propagate to the coating material, the ultrasound waves may produce vibrations or oscillations. These vibrations may cause the particles within the coating material to reposition, i.e. move and settle more tightly, facilitating compaction and even distribution of the material. In other words, the ultrasound waves may lead to an oscillating movement of the particles. The ultrasound waves may act as a dynamic force that helps in pressing and spreading the coating material effectively and precisely. The main parameters which may control the energy input into the granulate may be, for example, pressure as well as the amplitude and frequency of the ultrasound waves.

In one example, the ultrasound waves are focalized waves (e.g. set by electronically timing firings of a transducer array). Said focalized waves may have their focal point(s) in the stamp or in the coating material. For example, the waves may be controlled such that a shear wave is generated at the focal point(s) which propagates to or in the coating material. Said shear waves may be considered as a further form of oscillating movement caused by ultrasound waves. In particular, the shear wave may cause may produce vibrations or oscillations which reposition the coating material, as described above.

It may also be possible that the stamp is heated. The stamp may be heated using heat transfer, micro waves or infrared light. The heat of the stamp may be conducted to the coating material, which may enhance the formation of a coating layer. More specifically, the simultaneous use of oscillation and heat in the manufacturing process may result in several advantages for the coating layer of the electrode. Additionally, the application of heat may enhance the adhesion and fusion of the coating material to the substrate, thereby possibly improving the integrity and performance of the final coated electrode.

In one aspect, the oscillating movement of the stamp may be in a direction substantially parallel or perpendicular to the substrate.

In other words, the oscillating movement of the stamp may comprise a horizontal or vertical movement. Furthermore, the oscillating movement may comprise a combination of a horizontal and a vertical movement. This approach may further enhance the uniform settling of the coating material in all directions, ensuring a more homogeneous and stable coating layer on the substrate. Moreover, this process may significantly increase the friction within the coating material.

In one aspect, providing the substrate may comprise positioning the substrate on a base and/or moving belt which may be moveable in relation to the stamp.

The base or moving belt may refer to the work surface or platform used in the manufacturing process of the coated electrode. It may serve as the foundation upon which various steps of electrode production may be carried out. The base or moving belt may provide a stable and controlled surface for these manufacturing operations. The utilization of a moving belt may provide the advantage of preparing the coated electrode through an assembly line production process. The moving belt may move the substrate and/or the substrate and the coating layer applied onto the substrate.

In one aspect, the chamber may be open towards the substrate and/or may comprise a side wall having an edge which may configured to contact the substrate.

The chamber may have an opening facing the substrate, ensuring that the coating material in the chamber may come into direct contact with the substrate.

In one aspect, the chamber may comprise a bottom wall which may be substantially perpendicular to the side wall and/or substantially parallel to the substrate, wherein the side wall may be moveable in relation to the bottom wall in a direction perpendicular to the bottom wall.

The side wall may be solid. It is possible that there are grooves or openings in the bottom wall. The stamp may be combined with a punching device. The side wall may act as a blade or a separate blade within the side wall that "punches out" the coated electrode. Additionally, there may be an inner blade on the inside of the side wall, which cuts the coated electrode to size.

In one aspect, the method may further comprise cutting the substrate and/or the coated electrode into electrode components by the edge of the chamber.

The edge of the chamber may be designed to function as a cutting device. This configuration may enable the simultaneous formation of the coating layer and the cutting of the coated electrode into individual electrode components in a single step. With a relatively simple expansion stamping to the final dimensions of the coated electrode may be possible.

In one aspect, after forming the coating layer the coated electrode may be cut by moving the side wall in relation to the bottom wall in a direction towards the substrate and/or the base.

Optionally, cutting the coated electrode may be performed by the oscillating movement. This may be achieved in case the substrate may be thin enough. For better cutting results, the substrate may have a thickness of 6-20 µm or more preferably 4-15 µm.

The substrate or substrate foil (or film) may serve as a positive current collector or a negative current collector. In case the substrate serves as a positive current collector (i.e. for the cathode), the substrate may be an aluminum foil, typically 15 to 20 µm thick. Aluminum may have a high conductivity and it may be rather stable even at the high potential of the positive electrode. In case the substrate serves as a negative current collector (i.e. for the anode), the substrate may be a copper foil, typically 8 to 18 µm thick. Aluminum would be lighter and cheaper but it may not be used at the low potential of the negative electrode due to parasitic formation of a lithium/aluminum alloy.

In one aspect, the method may further comprise releasing the coating material from the stamp by removing the stamp from the substrate.

In essence, the coating material may adhere to the substrate, resulting in the formation of the coating layer. Essentially, the coating material may securely bond with the substrate to create a robust and continuous coating layer. This method may enable a precise control of the thickness and consistency of the coating layer.

In one aspect, the coating material may remain on the substrate in form of the coating layer after releasing the stamp. Optionally, the coating material may be released after the coating layer may be formed and/or after the coated electrode may be cut.

In other words, the stamp may be pressed onto the substrate, causing the coating material to undergo a reaction and transform into the coating layer, and then the stamp may be released.

In one aspect, the substrate may be configured as a current collector for the coated electrode. The substrate may comprise a conductive material. The conductive material may comprise, for example, copper, aluminum, nickel-coated copper foil, aluminum-coated copper foil, stainless steel foil, and/or copper-zinc alloy foil. The substrate may be a base foil and/or a mesh, such as a metal mesh. The substrate may be based on fiberglass with a metallic coating.

Furthermore, the coating material may comprise an active material in form of a granulate and optionally at least one of the following: conductive additive (e.g. carbon black or carbon nanotubes), other additives, and a binder (e.g. PVDF).

The active material may comprise a metal or a mixture of metals. The metals, for example, may be selected from lithium, sodium, magnesium, aluminum, potassium and/or calcium. The coating material may be a dry material.

More in particular, the active material, for example, for a negative battery electrode foil (i.e, anode), may comprise silicon, silicon oxides, carbon material, combinations thereof, and composites thereof. For example, the active material may comprise a silicon suboxide-carbon (SiOx/C, 1 ≤ x ≤ 2) composite. Silicon suboxide-carbon (SiOx/C, 1 ≤ x ≤ 2) composite is just one example of an active material. The examples of the active material of the positive battery electrode foil (i.e., cathode) in, for example, Li-ion batteries, include lithium cobalt oxide, lithium manganese oxides, lithium iron phosphate, lithium manganese iron phosphates, lithium nickel manganese cobalt oxide, lithium titanium oxide and lithium cobalt aluminum oxide. The active material of the battery electrode foil may be chosen to guarantee a good electrical conductivity, high thermal stability, and low resistance.

The binder may comprise, for example, a thermoplastic. The conductive additive may comprise, for example, nano tubes or carbon black.

The present disclosure also relates to a coated electrode prepared by any examples of the present disclosure. The coating layer may be optionally formed on each side of the substrate according to any examples of the present disclosure.

In other words, the coating layer may be positioned on both sides of the coated electrode. This approach may refer to double-sided (or two-sided) coating. Double-sided coating may comprise the simultaneous application of a coating material from both the top and bottom of a substrate. Alternatively, it may involve a sequential process where the substrate is initially coated from the top side, followed by a step where the substrate may be flipped, and the reverse side is subsequently coated from the top.

The present disclosure also relates to a method comprising: preparing a coated electrode according to any examples of the present disclosure.

The present disclosure also relates to a system for preparing a coated electrode, comprising: a stamp with a chamber, wherein the chamber is configured to be fillable with a coating material, a base and/or moving belt configured such that a substrate is placeable thereon, wherein the system is configured to form a coating layer on the substrate by pressing the stamp onto the substrate and simultaneously applying an oscillating movement and optionally heat to the stamp.

The disclosed method and/or system may offer a multitude of advantages, making it a highly efficient and sustainable approach in various aspects of the manufacturing process. These benefits may include, for example, the elimination of the need for solvents, expensive coating lines, and energy-consuming drying processes, resulting in substantial energy savings. Additionally, the method and/or system may possibly eliminate the necessity for calendering and slitting, leading to significant cost and resource reductions, and drastically reduces scrap production. Furthermore, the method and/or system may allow for highly targeted use of costly active materials, reducing overall production costs...

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 100 of preparing a coated electrode according to examples of the present disclosure.
Fig. 2A schematically shows the method step 101 of providing a stamp 205 with a chamber 210 according to examples of the present disclosure.
Fig. 2B schematically shows the method step 103 of forming a coating layer 230 on the substrate 220 by pressing the stamp 205 onto the substrate 220 while an oscillating movement is applied to the stamp 205 according to examples of the present disclosure.
Fig. 2C schematically shows the method step 104 of cutting the substrate 220 into electrode components by the first side wall 235 and the second side wall 240.
Fig. 2D schematically shows the method step of releasing the stamp 205 according to examples of the present disclosure.
Fig. 3 shows the stamp 205 pressed onto the substrate 220 and an oscillation device 310 connected to the stamp 205 according to examples of the present disclosure.
Fig. 4A shows a schematic drawing of a one-side coated electrode 250 according to examples of the present disclosure.
Fig. 4B shows a schematic drawing of a two-side coated electrode according to examples of the present disclosure.
Fig. 5 shows a schematic drawing of a lithium-ion battery 500 during discharging with an anode 510 and a cathode 520 according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

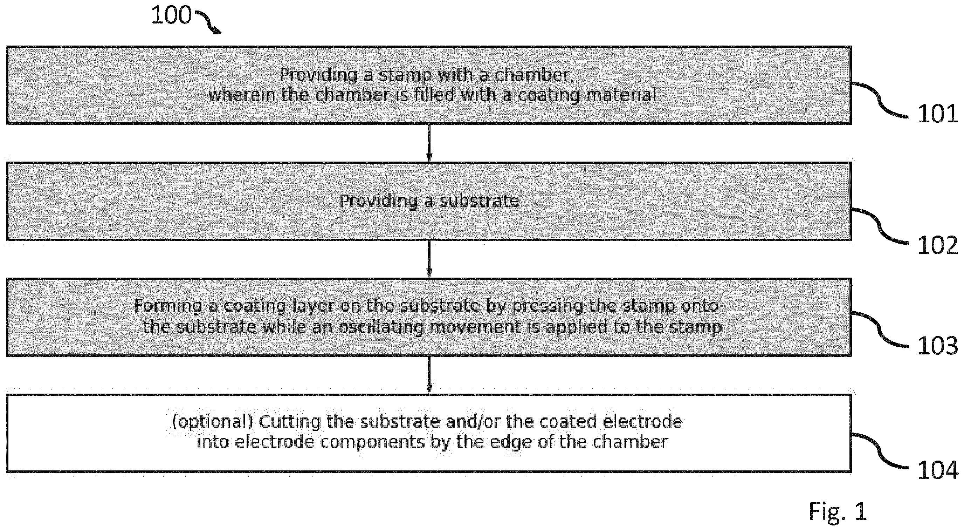

Fig. 1 shows a flowchart of a method 100 of preparing a coated electrode according to examples of the present disclosure.

The method 100 exemplarily comprises a first step 101 of providing a stamp with a chamber, wherein the chamber is filled with a coating material. After the first step 101, the method comprises a second step 102 of providing a substrate. In a third step 103, a coating layer on the substrate is formed by pressing the stamp onto the substrate while an oscillating movement is applied to the stamp.

After the steps 101 to 103, it is possible that the method 100 comprises further optional steps. For example, the method 100 may comprise an optional fourth step 104 of cutting the substrate and/or the coated electrode into electrode components by the edge of the chamber.

The method 100 eliminates the need for solvents. Furthermore, a drying or calendaring process is not necessary when applying the method 100.

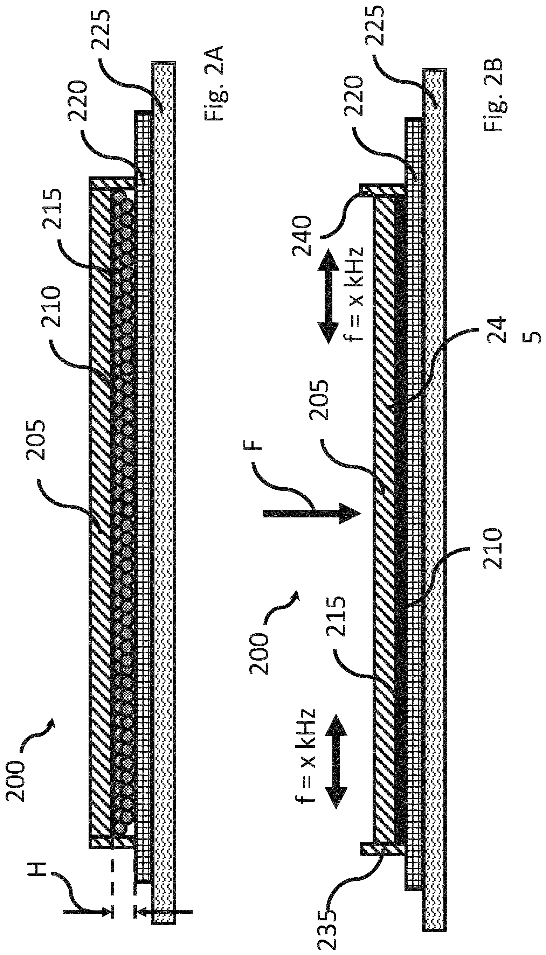

Figs. 2 A-D schematically show a method 100 of preparing a coated electrode with a manufacturing system 200 according to examples of the present disclosure. The manufacturing system 200 may comprise a stamp 205 with a chamber 210, wherein the chamber 210 is configured to be fillable with a coating material 215. Furthermore, the manufacturing system 200 may comprise a base 225 configured such that a substrate 220 is placeable thereon. At the same time, the base 225 is a moving belt. The manufacturing system 200 is configured to form a coating layer 230 on the substrate 220 by pressing the stamp 205 onto the substrate 220 and simultaneously applying an oscillating movement and optionally heat to the stamp 205. The method 100 may be a continuous coating process, i.e. after the preparation of a coated electrode, the base 225 may move another substrate 220 under the stamp 205 and the method 100 may be repeated.

The stamp 205 comprises a bottom wall 245, a first side wall 235 and a second side wall 240. Each of the side walls is moveable in relation to the bottom wall 245 in a direction perpendicular to the bottom wall 245 of the stamp 205.

It is noted that the stamp 205 and the base 225 may also have a different orientation, e.g. turned around 180° compared to the shown arrangement. Hence, the chamber 210 may be oriented upwards what can facilitate filling the chamber with electrode material.

Fig. 2A schematically shows the method step 101 of providing a stamp 205 with a chamber 210 according to examples of the present disclosure. Furthermore, Fig. 2A shows that a substrate 220 is provided according to method step 102.

The chamber 210 is an enclosed space for receiving the coating material 215. The chamber has a height H of less than about 500 µm. The chamber 210 is partly filled with coating material 215 in granulate form. The coating material 215 loosely distributed with air between the particles. The coating material 215 comprises a mixture of metals, wherein one of the metals is lithium.

The stamp 205 is a tool used to apply pressure on the coating material 215. The stamp 205 is situated above the substrate 220.

Fig. 2B schematically shows the method step of 103 forming a coating layer 230 on the substrate 220 by pressing the stamp 205 onto the substrate 220 while an oscillating movement is applied to the stamp 205 according to examples of the present disclosure.

A force F is applied to the stamp 205 resulting in a pressure. The bottom wall 245 of the stamp 205 presses the coating material 215 against the substrate 220. While the bottom wall 245 moves downward, the first side wall 235 and the second side wall 240 remain stationary on the substrate 220. As a result, the volume of the chamber 210 is decreased. While the volume of the chamber 210 decreases, the air in the chamber 210 between the particles of the coating material 230 may escape from the chamber 210 through an air duct not shown here.

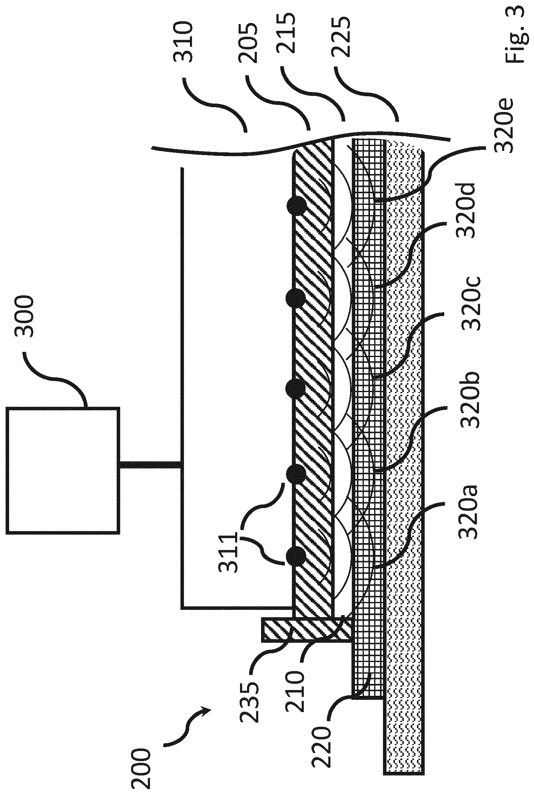

For example, a vibrator (not shown) may be mounted to the stamp 205 which is configured to induce an oscillating moving in form of a vibration to the stamp. However, as described above and also in context of fig. 3, also an ultrasound waves may be used. The oscillating movement of the stamp 205 may be in a direction substantially parallel to the substrate 220. In other words, the oscillating movement of the stamp 205 may comprise a substantially horizontal movement which helps to distribute the coating material homogenously across the substrate. However, the oscillating movement may also comprise a vertical component. In this example, the oscillating movement may create rapid, alternating pressure waves within the coating material 215. The oscillating movement may have a frequency of x kHz, wherein x stands for a value greater than about 20. In other words, the used frequencies may range from 20 kHz up to several gigahertz. When applied to the stamp 205, the oscillating movements or vibrations may be transferred to the coating material 215. These vibrations may cause the particles within the coating material 215 to move and settle more tightly, facilitating compaction and even distribution of the material. Furthermore, the oscillating movement may cause friction within the coating material 215. The oscillating movement may also cause the binder comprised by the coating material 215 to become close to or reach the melting point. However, the binder is desirably not melted (or only partially melted) but merely be heated in a homogeneous and fast manner. As a result of pressure and oscillation movement, the coating layer 230 may be formed.

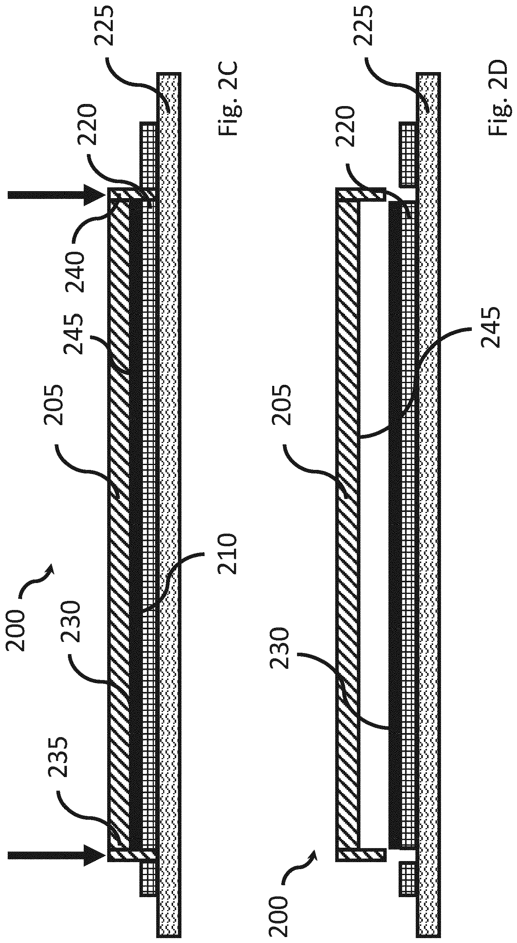

Fig. 2C schematically shows the method step 104 of cutting the substrate 220 into electrode components by the first side wall 235 and the second side wall 240.

A force may be applied to the first side wall 235 and the second side wall 240. As a result, the edges of the first side wall 235 and the second side wall 240 may cut the substrate 220.

Fig. 2D schematically shows the method step of releasing the stamp 205 according to examples of the present disclosure. With this step, the one-sided coated electrode 250 may be finalized in the method of the present disclosure.

As the stamp 205 is released, the coating layer 230 and the substrate 220 may remain on the base 225. The coating layer 230 and the substrate 220 may form the coated electrode 250. The coated electrode 250 may be one part of a battery electrode.

Fig. 3 shows the stamp 205 pressed onto the substrate 220 and an oscillation device 310 connected to the stamp 205 according to examples of the present disclosure.

The oscillation device 310 may be connected to a power source 300. The oscillation device 310 may comprise an ultrasound generator with one or multiple ultrasound transducers in the form of piezoelectrical elements 311 (or a transducer array). The oscillation device 310 may be attached to the stamp 205. The oscillation device 310 may also be integrated into the stamp. The oscillation device 310 may be the source for multiple ultrasound waves 320a, 320b, 320c, 320d and 320e. The ultrasound waves 320a, 320b, 320c, 320d and 320e may propagate through the stamp 205 and optionally even reach the chamber 210 filled with coating material 215.

For example, the stamp may be configured as or serve as a sonotrode tool. In particular, the stamp may be set into resonance vibrations by the introduction of high-frequency mechanical vibrations (i.e. ultrasound waves 320a, 320b, 320c, 320d and 320e). The stamp may thereby establish the connection between the oscillation device (i.e. an ultrasound generator) and the coating material. Accordingly, the stamp may operate like an ultrasound welding head.

In particular, the stamp may be set in vibration by means of ultrasound and simultaneously pressed onto the coating material to be welded. The vibration rubs the coating material, which quickly becomes hot and melts/welds. In other words, the coating material may be set in motion by the contact with an extremely fast vibrating stamp. Since the coating material may be enclosed by a chamber 210, the coating particles have a limited space and will rub against each other. This generates heat and air holes between particles may be closed.

It is also possible that the ultrasound waves propagated 320a, 320b, 320c, 320d and 320e directly into the coating material. In this case, in the coating material 215, the ultrasound waves 320a, 320b, 320c, 320d and 320e may produce vibrations or oscillations. For example, the ultrasound waves may cause shear propagating in the stamp and/or the electrode material, as described above. The thus produced vibrations or oscillations may cause the particles within the coating material 215 to move and settle more tightly, facilitating compaction and even distribution of the material. The ultrasound waves 320a, 320b, 320c, 320d and 320e may also lead to heat due the particles, in particular the binder within the coating material 215.

The substrate 220 or the base 225 may be configured to reflect the ultrasound waves 320a, 320b, 320c, 320d and 320e back towards the coating material 215 for a better compression of the coating material 215.

Alternatively or additionally, the oscillation device 310 may comprise a vibrator configured to vibrate the stamp (i.e. apply an oscillating movement). Such a vibration may lead to a homogeneous distribution of the coating material and optionally also may (at least slightly heat) the coating material.

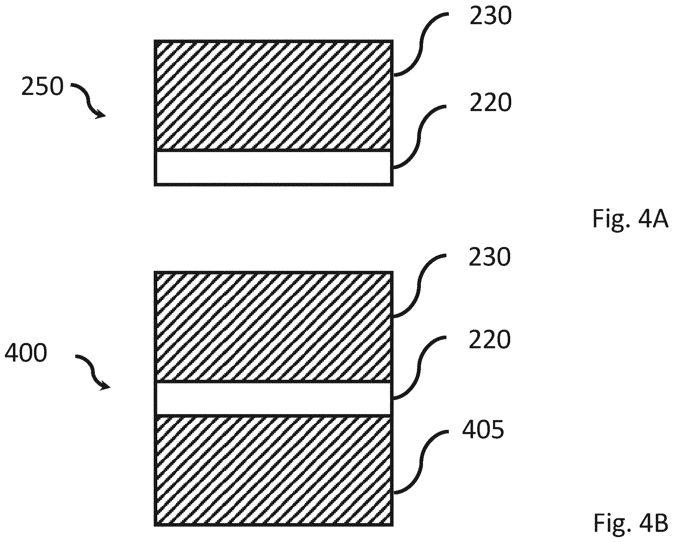

Fig. 4A shows a schematic drawing of a one-side coated electrode 250 according to examples of the present disclosure.

The coated electrode 250 comprises the substrate 220 and the coating layer 230. The one-side coated electrode 250 may serve as an anode in a lithium-ion. The substrate 220 may be a negative current collector. The substrate 220 may be a copper foil (typically 8 to 18 µm thick). As one example, the coating layer may comprise graphite (95% by weight) as the active material, carbon black (1% by weight) as the conductive additive, carboxymethyl cellulose (2% by weight) as the binder, and styrene-butadiene-rubber (2% by weight) as an additive. The substrate 220 has a thickness of about 10 µm and the coating layer 230 has a thickness of about 60 µm in this example.

Fig. 4B shows a schematic drawing of a two-side coated electrode 400 according to examples of the present disclosure.

The two-side coated electrode 400 comprises a substrate 220, a first coating layer 230, and a second coating layer 405. In other words, a coating layer 230, 405 may be positioned on both sides of the coated electrode 400. The preparation of the two-side coated electrode 400 may involve a sequential process where the substrate 220 is initially coated from the top side, followed by a step where the substrate 220 may be flipped, and the reverse side is subsequently coated from the top. Alternatively, the preparation of the two-side coated electrode 400 may involve the simultaneous coating from both the top and bottom of the substrate 220.

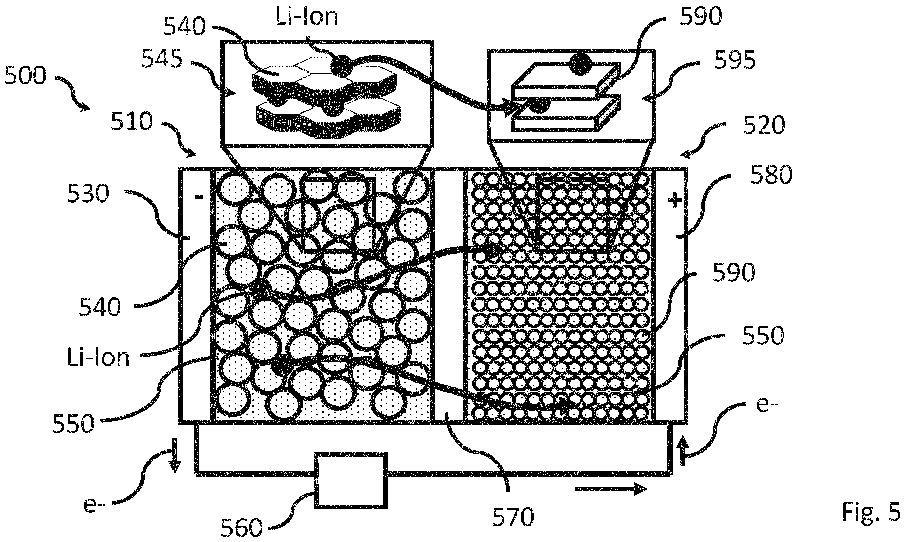

Fig. 5 shows a schematic drawing of a lithium-ion battery 500 during discharging with an anode 510 and a cathode 520 according to examples of the present disclosure. This example illustrates a basic scenario featuring two electrodes (anode 510 and cathode 520) to emphasize the roles of the components within the lithium-ion battery 500. However, it is widely acknowledged that multiple electrodes are typically stacked together to form a lithium-ion battery 500. Of course, a lithium-ion battery is only one possible use case of the coated electrodes of the present disclosure.

The anode 510 or cathode 520 may be a coated electrode according to any examples of the present disclosure. For example, the anode 510 or cathode 520 may be a one-side coated electrode 250 according to examples of the present disclosure.

The lithium-ion battery 500 may be rechargeable. In case of discharging the lithium-ion battery 500, the positive electrode is called "cathode" and the negative electrode is called "anode". This terminology is different during the charging process, where the positive electrode may work as anode and the negative electrode may work as cathode.

The anode 510 comprises a first substrate 530 and a first active material 540. The first the substrate 530 may be a copper foil, typically 8 to 18 µm thick. The cathode 520 comprises a second substrate 580 and a second active material 590. The second substrate 580 may be an aluminum foil, typically 15 to 20 µm thick. The lithium-ion battery 500 may further comprise a separator 570 that is positioned between the first active material 540 and the second active material 590. The separator 570 may be a porous membrane to electrically isolate the anode 510 and the cathode 520 from each other.

The lithium-ion battery 500 further usually comprises an ion-conducting electrolyte 550 (e.g. containing a dissociated lithium conducting salt). The ion-conducting electrolyte 550 may wet the separator 570, the first active material 540 and the second active material 590 to enable a flow of ions between the anode 510 and the cathode 520.

The lithium-ion battery 500 is connected to a load 560. Loads may be any device or component that consumes electrical energy, such as electric motors, heaters, computers, industrial machinery, light bulbs or electronic devices.

During discharging of the lithium-ion battery 500, the lithium ions (Li-Ion) may migrate from the first active material 540 of the anode 510 through the electrolyte 550 and the separator 570 to the second active material 590 of the cathode 520. Simultaneously, electrons (e-), serving as carriers of electricity, migrate from the first substrate 530 of the anode 510 through an external electrical connection (a cable), powering the load 560, and reaching the second substrate 580 of the cathode 520.

During charging, the process may be reversed: Lithium ions (Li-Ion) migrate from the second active material 590 through the electrolyte 550 and the separator 570 to the first active material 540. Simultaneously, electrons generated from an external power source move may enter the anode 510 and may provide energy to force the lithium ions back to their original location within the first active material 540.

Close-up 545 provides a schematic depiction, offering a detailed view of the process within the first active material 540. Meanwhile, close-up 595 similarly schematically illustrates the process occurring within the second active material 590 in greater detail.

A common first active material 540 of an anode 510 may be graphitic carbon, which may have a layered structure of carbon atoms in graphene layers shown in the close-up 545. During charging, lithium ions may be intercalated between the layers, and during discharging, lithium leaves the graphite. Graphite may be stable even without lithium and can be almost completely discharged. For complete discharging, the reaction at the negative electrode is:

*LiC*₆ → *Li*⁺ + *e*⁻ + 6C

For every mole (7g) of active lithium, six moles (72g) of carbon may act as hosts during charging.

A traditional second active material 590 of a cathode 520 is, for example, lithiated cobalt oxide (LiCoO2). The active material 590 may have a layered structure comprising cobalt, oxygen, and lithium ion layers shown in the close-up 595. During charging, lithium leaves the crystal structure (deintercalation) and returns during discharging (intercalation), but only about 50% of the lithium may be utilized. If more than half leaves, it might cause structural collapse, releasing oxygen and potentially leading to thermal runaway. For complete discharging, the reaction at the positive electrode is:

2*Li*_{0.5}*CoO*₂ + *Li*⁺ + *e*⁻ → 2*LiCoO*₂

To achieve complete discharging, two moles (189g) of Li0.5CoO2 may be required for every mole (7g) of active lithium.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A method (100) of preparing a coated electrode (250, 400), the method (100) comprising:
providing a stamp (205) with a chamber (210), wherein the chamber (210) is filled with a coating material (215);
providing a substrate (220), and
forming a coating layer (230, 405) on the substrate (220) by pressing the stamp (205) onto the substrate (220) while an oscillating movement is applied to the stamp (205).

2. The method (100) of claim 1, wherein
forming the coating layer (230, 405) comprises generating a chamber pressure, at least partially by pressing the stamp (205) onto the substrate (220).

3. The method (100) of claim 1 or 2, wherein
ultrasound waves (320a, 320b, 320c, 320d, 320e) are applied to the stamp (205) in order to generate the oscillating movement, and/or heat is applied to the stamp (205).

4. The method (100) according to any one of the preceding claims, wherein
the oscillating movement of the stamp (205) is in a direction substantially parallel or perpendicular to the substrate (220).

5. The method (100) according to any one of the preceding claims, wherein providing the substrate (220) comprises positioning the substrate (220) on a base (225) and/or moving belt which is moveable in relation to the stamp (205).

6. The method (100) according to any one of the preceding claims, wherein
the chamber (210) is open towards the substrate (220) and/or comprises a side wall (235, 240) having an edge which is configured to contact the substrate (220).

7. The method (100) according to the preceding claim, wherein
the chamber (210) comprises a bottom wall (245) which is substantially perpendicular to the side wall (235, 240) and/or substantially parallel to the substrate (220), wherein the side wall (235, 240) is moveable in relation to the bottom wall (245) in a direction perpendicular to the bottom wall (245).

8. The method (100) according to the preceding claim 6 or 7, wherein
the method (100) further comprises cutting the substrate (220) and/or the coated electrode (250, 400) into electrode components by the edge of the chamber (210).

9. The method (100) according to the preceding claim 7 or 8, wherein
after forming the coating layer (230, 405) the coated electrode (250, 400) is cut by moving the side wall (235, 240) in relation to the bottom wall (245) in a direction towards the substrate (220) and/or the base (225).

10. The method (100) according to any one of the preceding claims, wherein
the method (100) further comprises releasing the coating material (215) from the stamp (205) by removing the stamp (205) from the substrate (220).

11. The method (100) according to the preceding claim, wherein
the coating material (215) remains on the substrate (220) in form of the coating layer (230, 405) after releasing the stamp (205), wherein optionally the coating material (215) is released after the coating layer (230, 405) is formed and/or after the coated electrode (250, 400) is cut.

12. The method (100) according to any one of the preceding claims, wherein
the substrate (220) is configured as a current collector for the coated electrode (250, 400), and/or
the coating material (215) comprises an active material in form of a granulate and optionally at least one of the following: a binder, a solvent and a conductive additive.

13. A coated electrode (250, 400) prepared by any one of the preceding claims, wherein optionally a coating layer (230, 405) is formed on each side of the substrate (220) according to any one of the preceding claims.

14. A method (100) of producing a battery cell, the method (100) comprising: preparing a coated electrode (250, 400) according to any one of the preceding claims.

15. A system (200) for preparing a coated electrode (250, 400), comprising:
a stamp (205) with a chamber (210), wherein the chamber (210) is configured to be fillable with a coating material (215),
a base (225) and/or moving belt configured such that a substrate (220) is placeable thereon, wherein
the system (200) is configured to form a coating layer (230, 405) on the substrate (220) by pressing the stamp (205) onto the substrate (220) and simultaneously applying an oscillating movement and optionally heat to the stamp (205).
